# EUROPÄISCHE PATENTSCHRIFT

(11) **EP 1 389 518 B1**
(45) Veröffentlichungstag und Bekanntmachung des Hinweises auf die Patenterteilung: **23.08.2006**
(21) Anmeldenummer: 03450179.1
(22) Anmeldetag: 29.07.2003
(51) Int. Cl.: B29C 59/08, B29C 59/10, C08F 8/06, C08J 7/12, F24D 3/00

(54) **Kunststoffrohr aufweisend eine Sauerstoffsperrschicht, sowie Verfahren zu dessen Herstellung**
Thermoplastic pipe having an oxygen barrier layer, and method of its manufacturing
Tuyau en matière thermoplastique ayant une couche barrière contre l'oxygène, et methode de son fabrication

(30) Priorität: 05.08.2002 AT 11832002
(43) Veröffentlichungstag der Anmeldung: 18.02.2004
(73) Patentinhaber: KE-KELIT Kunststoffwerk Gesellschaft m.b.H., A-4017 Linz (AT)
(72) Erfinder: Rametsteiner, Karl, 4040 Linz (AT)
(74) Vertreter: Hübscher, Helmut

(56) Entgegenhaltungen:
- WO-A-01/29118
- WO-A-02/04552
- WO-A-89/09795
- US-A- 3 286 009
- US-A- 5 879 757
- US-A1- 2001 046 561
- HANSMANN H: "Plasmavorbehandlung problematischer Kunststoff-Oberflächen für die Lackierung" MATERIALWISSENSCHAFT UND WERKSTOFFTECHNIK, Bd. 24, 1993, Seiten 49-56, XP009017803 ISSN: 0933-5137
- MANN, DIETER ANDREAS: "Plasmamodifikation von Kunststoffoberflächen zur Haftfestig- keitssteigerung von Metallschichten" 1993 , DISSERTATION UNIVERSITÄT STUTTGART XP002257011 * Seite 14 - Seite 24 *
- HARTMANN R: "Plasmamodifizierung von Kunststoffoberflächen" TECHNISCHE RUNDSCHAU, Bd. 80, Nr. 17, 1988, Seiten 20-23, XP001155301 ISSN: 1023-0823
- BDH - BUNDESVERBAND DER DEUTSCHEN HEIZUNGSINDUSTRIE: INFORMATIONSBLATT, Nr. 11, Juni 1998 (1998-06), XP002257010
- BORCHARDT H ET AL: "Extrusion von Rohren aus vernetztem Polyethylen (PE-X)" KUNSTSTOFFE, Bd. 89, Nr. 12, Dezember 1999 (1999-12), Seiten 74-76, XP000949627 ISSN: 0023-5563
- MICHAELI W ET AL: "Plasma löst Permeationsprobleme" KUNSTSTOFFZEITUNG (K-ZEITUNG), Nr. 17, 6. September 2001 (2001-09-06), Seiten 29-30, XP009017807 ISSN: 0023-5563
- DAHLMANN R: "Permeation durch plasma- polymerisierte Schichten und Plasma- beschichtung von Kunststoffrohren und -hohlkörpern" 2001 , DISSERTATION RWTH AACHEN XP002257012 * Kapitel 2.5.2 *
- FRIEDRICH J ET AL: "Untersuchungen zur Plasmaätzung von Polymeren; Teil I: Strukturänderungen von Polymeren nach Plasmaätzung" ACTA POLYMERICA, Bd. 30, Nr. 8, 1979, Seiten 470-477, XP009018071 ISSN: 0323-7648
- FRIEDRICH J ET AL: "Untersuchungen zur Plasmaätzung von Polymeren; Teil II: Einfluss der Plasmaparameter auf die Abbaugeschwindigkeit und die Freilegung übermolekularer Polymerstrukturen" ACTA POLYMERICA, Bd. 31, Nr. 1, 1980, Seiten 52-58, XP009018068
- FRIEDRICH J ET AL: "Untersuchungen zur Plasmaätzung von Polymeren; Teil III: Plasmamodifizierung von Polymeroberflächen zur Verbesserung der Hafteigenschaften der Polymere" ACTA POLYMERICA, Bd. 31, Nr. 1, 1980, Seiten 59-62, XP009018070 ISSN: 0323-7648
- FRIEDRICH J ET AL: "Untersuchungen zur Plasmaätzung von Polymeren; Teil IV: Selektives Plasmaätzen von Polyethylenen unterschiedlicher Kristallinität" ACTA POLYMERICA, Bd. 31, Nr. 5, 1980, Seiten 310-315, XP009018069 ISSN: 0323-7648
- WURSTER T ET AL: "Zerstörungsfreie Kunststoffprüfung im Rückdiffusions- verfahren" KUNSTSTOFFE, Bd. 76, Nr. 1, 1986, Seiten 68-71, XP001154427
- MEVIUS W: "Diffusion bei PE-HD-Rohren" 3R INTERNATIONAL, Bd. 33, Nr. 9, 1994, Seiten 492-495, XP009018468
- MICHAELI W ET AL: "Plasmapolymerisation: Innenbeschichtung von K-Rohren stoppt Permeation" KUNSTSTOFFE-SYNTHETICS, Bd. 32, Nr. 9, 2001, Seiten 10-16, XP009017801

## Beschreibung

Die Erfindung bezieht sich auf ein Kunststoffrohr, insbesondere für eine Warmwasserheizung, mit einem Mantel aus einem Polyolefin und mit einer den Mantel außen umschließenden Sauerstoffsperrschicht.

Da Sauerstoff durch den Mantel eines Kunststoffrohres aus Polyolefin diffundiert, weisen diese Kunststoffrohre beim Einsatz für Warmwasserheizungen den Nachteil auf, daß der durch die Kunststoffrohre diffundierende Luftsauerstoff über das Wasser als Wärmeträger im Heizkreislauf geführt wird und im Bereich des Heizkreislaufes befindliche Eisenmetalle beispielsweise von Heizkörpern, Kesseln oder Pumpen angreift. Die dadurch bedingte Korrosion der Eisenmetalle gefährdet die jeweiligen Anlagenteile. Außerdem bilden die Eisenoxide im Wasserkreislauf einen Schlamm, der sich in den Leitungen absetzt, den Strömungswiderstand erhöht und unter Umständen zu einer Verstopfung der Leitungen führt. Aus diesem Grunde wird beim Einsatz von Kunststoffrohren von Warmwasserheizungen eine Sauerstoffsperrschicht gefordert, beispielsweise aus einer in den Mantel des Kunststoffrohres eingebetteten Aluminiumfolie. Abgesehen davon, daß mit dem Einbetten einer Aluminiumfolie in den Mantel des Kunststoffrohres ein erheblicher Herstellungsaufwand verbunden ist, ergeben sich durch die Aluminiumfolie wegen der begrenzten Dehnungseigenschaften Schwierigkeiten beim Biegen der Kunststoffrohre. Abgesehen davon lassen sich diese Kunststoffrohre wegen der Aluminiumfolie nicht mehr schweißen.

Zur Vermeidung dieser Nachteile ist es bekannt (DE 39 03 436 A1, DE 39 01 929 A1), eine Sauerstoffsperrschicht aus Äthylenvinylalkohol oder einem Copolymerisat davon vorzusehen. Da zur Verbindung einer solchen Sauerstoffsperrschicht mit dem Polyolefinmantel eines Kunststoffrohres ein Haftvermittler erforderlich wird, müssen beim Extrudieren dieser Kunststoffrohre Extrudierwerkzeuge für den Polyolefinmantel, die Haftvermittlungsschicht und die Sauerstoffsperrschicht vorgesehen werden, wenn das Kunststoffrohr in einem Arbeitsgang extrudiert werden soll. Es ergibt sich somit ein vergleichsweise aufwendiges Herstellungsverfahren. Kunststoffrohre mit einer Sauerstoffsperrschicht aus Äthylenvinylalkohol oder einem Copolymerisat davon lassen sich zwar schweißen, doch muß hiefür die Sauerstoffsperrschicht vom Rohrende weggeschoben oder abgeschält werden (DE 39 01 929 A1), so daß auch der Schweißvorgang mit einem Mehraufwand verknüpft ist.
Schließlich ist es bekannt (WO 02/04552 A1, WO 01/29118A1, WO 89/09795A1, US 3 286 099 A), die Oberfläche eines Polymers durch eine Flammbehandlung, eine Koronaentladung oder durch geeignete Oxidationsmittel einem Oxidationsvorgang auszusetzen, um die Benetzungseigenschaften und damit die Haftfestigkeit einer anschließend auf die so behandelte polymere Oberfläche aufgebrachten Deckschicht zu verbessern. Damit kann aber kein Diffundieren von Luftsauerstoff durch die polymere Oberfläche verhindert werden, es sei denn, die aufgebrachte Schicht stellt eine Sauerstoffsperrschicht dar.
Ergänzend wird noch auf die Veröffentlichung von H. Hansmann: "Plasmavorbehandlung problematischer Kunststoff-Oberflächen für die Lackierung", Mat.-wiss. u. Werkstofftechnik 24, Seiten 49 bis 56, erschienen 1993 (siehe auch XP 009017803), hingewiesen.

Der Erfindung liegt somit die Aufgabe zugrunde, ein Kunststoffrohr, insbesondere für eine Warmwasserheizung, der eingangs geschilderten Art so auszugestalten, daß eine ausreichende Sauerstoffsperre sichergestellt werden kann, ohne die einfache Schweißbarkeit des Kunststoffrohres zu gefährden.

Die Erfindung löst die gestellte Aufgabe dadurch, daß die Sauerstoffsperrschicht aus einem Hydroxylgruppen enthaltenden Polymeranteil an der Oberfläche des Polyolefinmantels besteht.

Da der Polyolefinmantel Hydroxylgruppen aufweist, die als Sauerstoffsperrschicht genützt werden können, ergibt sich ein einfacher Aufbau des Kunststoffrohres, wobei die Eigenschaften des Polyolefinmantels insbesondere hinsichtlich der Schweißfähigkeit ohne Beeinträchtigung der Sauerstoffsperre einfach genützt werden können. Die an der Oberfläche des Polyolefinmantels gebildeten Hydroxylgruppen ergeben bei einer entsprechenden Menge eine Sperrwirkung für den Sauerstoff, die durchaus mit der einer Sauerstoffsperrschicht aus Äthylenvinylalkohol oder einem Copolymerisat davon vergleichbar ist.

Die Herstellung solcher Kunststoffrohre ist einfach, weil der Polyolefinmantel lediglich in herkömmlicher Weise zu extrudieren ist. Nachträglich ist dann für eine Oxygenierung der Polyolefinoberfläche des Mantels zu sorgen, wofür mehrere Möglichkeiten zur Verfügung stehen. So kann die Außenfläche des extrudierten Mantels nach seiner Abkühlung einer Flammbehandlung mit Sauerstoffüberschuß ausgesetzt werden, der im Zusammenhang mit der Flammbehandlung zur Oxygenierung der Polyolefinoberfläche und damit zur Bildung von Hydroxylgruppen führt. Eine andere Möglichkeit zur Oxygenierung besteht darin, die Außenfläche des extrudierten Mantels nach seiner Abkühlung einer hochfrequenten Koronaentladung auszusetzen, wobei wiederum Sauerstoffatome aus dem Luftsauerstoff in die Oberfläche des Polyolefins eingebaut und Hydroxylgruppen gebildet werden.

Schließlich können zur Oxygenierung der Oberfläche des Polyolefinmantels Oxidationsmittel eingesetzt werden, die in einem Behandlungsbad für den extrudierten Polyolefinmantel gelöst sind. Als Oxidationsmittel eignet sich beispielsweise Chromsäure, Peressigsäure, Perchlorsäure oder nascierender Sauerstoff.

Bei der Oxygenierung der Polyolefinoberfläche des Mantels von Kunststoffrohren besteht allerdings die Gefahr, daß sich Ketone ausbilden, die die Sperrwirkung für den Sauerstoff beeinträchtigen. Bei der Ausbildung von Ketonen muß daher nach der Oxygenierung eine Reduktion durch ein Reduktionsmittel vorgenommen werden. Solche Reduktionsmittel sind beispielsweise Alkaliborhydride, komplexe Alkalialuminiumhydride, Hydrazin, nascierender Wasserstoff oder katalytisch aktivierter Wasserstoff.

Anhand der nachstehenden Beispiele soll die Erfindung näher erläutert werden. Dabei werden Proben erfindungsgemäßer Kunststoffrohre hinsichtlich der Sauerstoffdiffusion mit entsprechenden Kunststoffrohren einerseits mit und anderseits ohne Sauerstoffsperrschicht auf der Basis eines Äthylenvinylalkoholcopolymers (EVOH) verglichen.

Beispiel 1:
Aus einem Polyäthylenoktencopolymer wurde mit einer Geschwindigkeit von 25m/min ein Kunststoffrohr mit einem Nenndurchmesser von 16 mm und einer Wanddicke von 2 mm extrudiert. Unmittelbar nach dem Abkühlen dieses Rohres wurde die Oberfläche des Rohrmantels mit Hilfe eines Ringbrenners einer Flammenbehandlung unterworfen. Im Ringbrenner wurde Erdgas mit Luftüberschuß verbrannt. Obwohl die Verweildauer der Manteloberfläche im Brennerbereich lediglich Bruchteile einer Sekunde betrug, konnte über den Mantelumfang eine ausreichende Menge an Hydroxylgruppen durch ein Oxygenieren gebildet werden. Die Kontrolle der Hydroxylgruppenbildung kann durch einen auf die Oberfläche des Rohrmantels aufgebrachten Wassertropfen überprüft werden, der sich im Gegensatz zu einem unbehandelten Rohr über den Rohrumfang verteilt, da zugleich eine Hydrophilierung der Oberfläche des Polyolefinmantels eintritt.

Eine Untersuchung hinsichtlich einer allfälligen Ketonbildung mit Hilfe einer Infrarotspektroskopie ergab, daß sich im Bereich einer Wellenzahl von 1710 bis 1730 cm-¹, die für das Vorhandensein einer CO-Gruppe in einer Verbindung charakteristisch ist, keine ausgeprägte Absorption zeigte, was auf das Fehlen von Ketonen hinweist. Im Bereich der für das Vorhandensein einer OH-Gruppe charakteristischen Wellenzahl im Bereich von 3200 bis 3500 cm-¹ ergab sich jedoch eine ausgeprägte Absorption, die die Bildung der Hydroxylgruppen erkennen ließ.

Die Sauerstoffdiffusion durch das erfindungsgemäß behandelte Kunststoffrohr wurde gemäß Ö-NORM B5157 gemessen und betrug 0,073g/m³.24h bei 40°C. Ein Rohr aus dem gleichen Werkstoff mit den gleichen Abmessungen, jedoch mit einer Sauerstoffsperrschicht aus EVOH wies eine Sauerstoffdiffusion von 0,072g/m³.24h bei 40°C auf. Der Wert der Sauerstoffdiffusion für ein vergleichbares Rohr ohne Sauerstoffsperrschicht betrug 9,5g/m³.24h bei 40°C.

Beispiel 2:
Aus einem Polypropylen-Polyäthylen-Copolymerisat mit einem Äthylengehalt von 9,5 Gew. % wurde ein Rohr mit einem Nenndurchmesser von 25 mm und einer Wanddicke von 3,7 mm entsprechend dem Beispiel 1 extrudiert. Dieses Kunststoffrohr wurde zu Bünden von 100 m gerollt und bei verschlossenen Rohrenden für eine Zeitspanne von 3 min in ein Oxidationsbad getaucht. Das Oxidationsbad enthielt als Oxidationsmittel Chromsäure in einer Konzentration von 50g/l und wurde auf 60°C angewärmt. Da eine Infrarotspektroskopie der Manteloberfläche eine deutliche Absorption bei einer Wellenzahl zwischen 1710 und 1730 cm-¹ ergab, was auf die Bildung von Ketonen rückschließen ließ, wurde das Rohr nach einer Spülung mit Wasser einer Reduktion unterworfen, und zwar in einem Bad aus einem im Verhältnis 1:1 bestehenden Gemisch aus Wasser und Isopropylalkohol, wobei in diesem Gemisch Natriumborhydrid in einer Konzentration von 6g/l gelöst wurde. Bei einer Temperatur von 50°C wurde das Rohr während einer Zeitspanne von 3 min in dieses Reduktionsbad getaucht und nach einer erneuten Spülung mit Wasser getrocknet. Die Oberfläche des in dieser Weise nachbehandelten Rohres zeigte in der Infrarotspektroskopie im Bereich der Wellenzahlen zwischen 1710 und 1730 cm-¹ keine Absorption.

Die Sauerstoffdiffusion betrug für das in der beschriebenen Weise behandelte Rohr 0,020g/m³.24h bei 40°C. Das Vergleichsrohr mit einer EVOH-Sauerstoffsperrschicht wies eine Sauerstoffdiffusion von 0,058g/m³.24h bei 40°C auf. Die Sauerstoffdiffusion mit einem Vergleichsrohr ohne Sauerstoffsperrschicht wies eine Sauerstoffdiffusion von 2,6g/m3.24h bei 40°C auf.

Beispiel 3:
Ein Kunststoffrohr aus Polybuten wurde unter den Bedingungen des Beispieles 1 mit einem Nenndurchmesser von 60 mm und einer Wanddicke von 5,8 mm extrudiert. Zum Oxygenieren der Manteloberfläche wurde das Rohr einer hochfrequenten Koronaentladung ausgesetzt. Die Wechselspannung betrug 10KV und wies eine Frequenz von 12kHz auf. Die Funkenentladestrecke betrug ca. 5 cm. Während beim erfindungsgemäß behandelten Rohr keine Sauerstoffdiffusion gemäß Ö-NORM B5157 nachgewiesen werden konnte, wurde bei einem Vergleichsrohr mit einer EVOH-Sauerstoffsperrschicht eine Sauerstoffdiffusion von 0,06g/m³.24h bei 40°C gemessen. Ein Vergleichsrohr ohne Sauerstoffsperrschicht zeitigte eine Sauerstoffdiffusion von 0,8g/m³.24h bei 40°C.

Die Erfindung ist selbstverständlich nicht auf die Ausführungsbeispiele beschränkt, sondern läßt sich auf Kunststoffrohre aus unterschiedlichen Polyolefinen anwenden. Es wurden beispielsweise Versuche mit Kunststoffrohren aus silanvernetztem Polyäthylen, aus strahlenvernetztem Polyäthylen oder aus einem Polypropylen-Block-Copolymer mit gutem Erfolg durchgeführt, wobei eine Sauerstoffdiffusion zum Teil nicht mehr nachweisbar war.

## Patentansprüche

1. Kunststoffrohr, insbesondere für eine Warmwasserheizung, mit einem Mantel aus einem Polyolefin und mit einer den Mantel außen umschließenden Sauerstoffsperrschicht, **dadurch gekennzeichnet, daß** die Sauerstoffsperrschicht aus einem Hydroxylgruppen enthaltenden Polymeranteil an der Oberfläche des Polyolefinmantels besteht.

2. Verfahren zum Herstellen eines Kunststoffrohres nach Anspruch 1, insbesondere für eine Warmwasserheizung, wobei ein Mantel aus einem Polyolefin extrudiert, abgekühlt und außen mit einer Sauerstoffsperrschicht versehen wird, **dadurch gekennzeichnet, daß** zur Bildung der Sauerstoffsperrschicht im Polymeranteil der Außenschicht des extrudierten Mantels nach seiner Abkühlung durch eine Oxygenierung Hydroxylgruppen gebildet werden.

3. Verfahren nach Anspruch 2, **dadurch gekennzeichnet, daß** die Außenfläche des extrudierten Mantels nach seiner Abkühlung einer Flammbehandlung mit Sauerstoffüberschuß ausgesetzt wird.

4. Verfahren nach Anspruch 2, **dadurch gekennzeichnet, daß** die Außenfläche des extrudierten Mantels nach seiner Abkühlung einer hochfrequenten Koronaentladung ausgesetzt wird.

5. Verfahren nach Anspruch 2, **dadurch gekennzeichnet, daß** die Außenfläche des extrudierten Mantels nach seiner Abkühlung mit einem Oxidationsmittel und gegebenenfalls anschließend mit einem Reduktionsmittel behandelt wird.

## Claims

1. Plastic pipe, particularly for a hot water heater, having a jacket made of a polyolefin and an oxygen barrier layer surrounding the outside of the jacket, **characterised in that** the oxygen barrier layer consists of a polymer part containing hydroxyl groups on the surface of the polyolefin jacket.

2. Method for manufacturing a plastic pipe, particularly for a hot water heater, wherein a jacket made of a polyolefin is extruded, cooled and provided on the outside with an oxygen barrier layer, **characterised in that** for the formation of the oxygen barrier layer, in the polymer part of the outer layer of the extruded jacket, after its cooling, hydroxyl groups are formed by oxygenation.

3. Method according to claim 2, **characterised in that** the outer surface of the extruded jacket is exposed, after its cooling, to flame treatment with an oxygen excess.

4. Method according to claim 2, **characterised in that** the outer surface of the extruded jacket is exposed, after its cooling, to a high frequency corona discharge.

5. Method according to claim 2, **characterised in that** the outer surface of the extruded jacket is treated, after its cooling, with an oxidation agent and possibly then with a reducing agent.

## Revendications

1. Tuyau en matière synthétique, en particulier pour un chauffage à l'eau chaude, avec une enveloppe en une polyoléfine et avec une couche de barrière à l'oxygène entourant extérieurement l'enveloppe, **caractérisé en ce que** la couche de barrière à l'oxygène est composée d'une proportion de polymère contenant un groupe hydroxyle, sur la surface de l'enveloppe en polyoléfine.

2. Procédé de fabrication d'un tube en matière synthétique selon la revendication 1, en particulier, pour un chauffage à l'eau chaude, où une enveloppe en une polyoléfine est extrudée, refroidie et munie extérieurement d'une couche de barrière à l'oxygène, **caractérisé en ce que**, pour former la couche de barrière à l'oxygène dans la proportion de polymère de la couche extérieure de l'enveloppe extrudée, après son refroidissement, des groupes hydroxyle sont formés par une oxygénation.

3. Procédé selon la revendication 2, **caractérisé en ce que** la surface extérieure de l'enveloppe extrudée après son refroidissement est exposée à un traitement à la flamme avec un excès d'oxygène.

4. Procédé selon la revendication 2, **caractérisé en ce que** la face extérieure de l'enveloppe extrudée, après son refroidissement, est exposée à une décharge Corona à haute fréquence.

5. Procédé selon la revendication 2, **caractérisé en ce que** la face extérieure de l'enveloppe extrudée, après son refroidissement, est traitée avec un agent d'oxydation et, le cas échéant, ensuite, avec un agent de réduction.
